Europäisches Patentamt

European Patent Office

Office européen des brevets

(11) Publication number: **0 193 635 B1**

# EUROPEAN PATENT SPECIFICATION

(45) Date of publication of patent specification: **15.01.92**  (51) Int. Cl.⁵: **G07F 7/08**

(21) Application number: **85102617.9**

(22) Date of filing: **07.03.85**

(54) IC card system.

(43) Date of publication of application:
**10.09.86 Bulletin 86/37**

(45) Publication of the grant of the patent:
**15.01.92 Bulletin 92/03**

(84) Designated Contracting States:
**AT BE CH DE FR GB IT LI LU NL SE**

(56) References cited:
**EP-A- 0 058 029**
**EP-A- 0 114 773**
**FR-A- 2 403 597**
**US-A- 4 001 550**

(73) Proprietor: **OMRON TATEISI ELECTRONICS CO.**
**10, Tsuchido-cho Hanazono Ukyo-ku**
**Kyoto 616(JP)**

(72) Inventor: **Matsumoto, Hiromichi Omron Tateisi Electronics Co.**
**Patent Center Shimo-Kaiinji**
**Nagaokakyo-shi Kyoto(JP)**

(74) Representative: **WILHELMS, KILIAN & PART-NER Patentanwälte**
**Eduard-Schmid-Strasse 2**
**W-8000 München 90(DE)**

EP 0 193 635 B1

## Description

This invention relates to an IC card and more particularly to an IC card system comprising an IC card-receiving means to transmit data to and from the IC card.

An IC-buried card has a data processing function and is assured to allow a wide range of applications. Due to its convenience, the IC card is assumed to replace conventional magnetic stripe cards (MS cards). With the use of an IC memory, the IC card in accordance with this invention is improved in data storage capacity and reliability of data-reading in comparison with the MS card. Thus featured IC card will promise the use by a holder for many different terminals. The current problem is, therefore, how to assure storage of a number of different data in the card.

A card system according to the preamble of claim 1 is known from EP-A-0 114 773, which document however is silent about how that and only that memory area of the card is accessed that relates to the requested service represented by the terminal to which the card is applied.

It is an object of the present invention to provide an IC card which has advantageously a large storage capacity thereby assuring a use of one card for various terminals.

Another object of this invention is to assure highly reliable performance and security by providing the card with exclusive data storage areas for the use with respective terminals.

The invention is as claimed in the claim.

In the IC card system in accordance with the present invention, a data storage region is provided in the IC card. The region consisting of a plurality of areas, is to assure data exchange between the IC card and a terminal to which the IC card is applied. To be more specific, when applied to a terminal, the card receives data from the terminal, thereby assuring access to its own area of the data storage region. When the card is applied to a different terminal, other area within the region is available.

A preferred embodiment of the invention will now be described with reference to the accompanying drawings, in which:

Fig. 1 is an external view of the IC card to be applied for an IC card system according to the present invention,

Fig. 2 is a block diagram of the IC used,

Fig. 3 shows the structure of a major part of the ROM 21 of the IC,

Fig. 4 shows types of terminals which permit the use of the IC card,

Fig. 5 is a flow chart illustrating the operation procedure when the IC card is applied, and

Fig. 6 and Fig. 7 are detailed flow charts of the steps n1 and n6 of the flow chart of Fig.5, respectively.

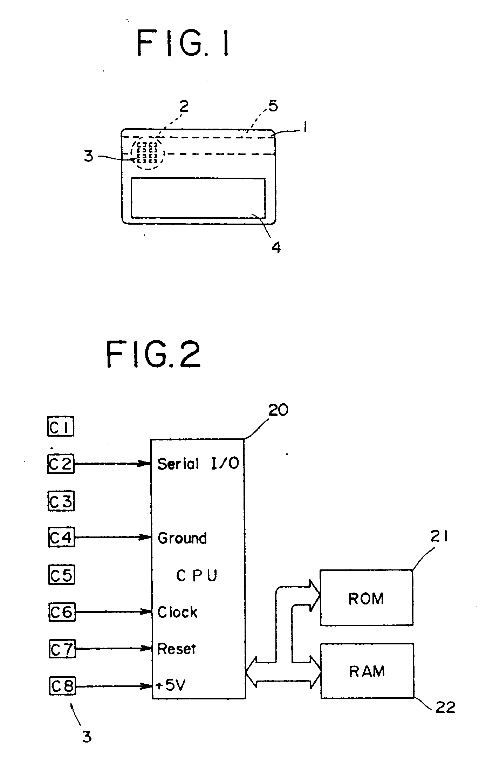

Fig. 1 is an external view of the IC card prepared for the use with the IC card system in accordance with the present invention. In this figure, the IC 2 is buried inside an IC card made of plastic. On the upper surface of the IC 2, an eight-terminal connector 3 is formed exposedly. In addition, on the front surface of the card, formed is the embossment 4, and on the back, formed is the magnetic stripe 5 to be used as a spare storage medium.

Fig. 2 is a block diagram of the IC 2. The IC 2 is composed of CPU 20, EE PROM 21 to perform electrical writing and erasing (hereinafter abbreviated as ROM), and RAM 22 for working storage. The connector 3 is consisted of the C1 through C8 and electric power is supplied to the CPU 20 by means of the terminals C4 and C8 when the IC card is inserted into the card-receiving means. A reset pulse and a clock signal are also supplied to the CPU 20 through the connector C7 and connector C6. Further, serial data exchange between the CPU 20 and the IC card receiving means is performed through the connector C2.

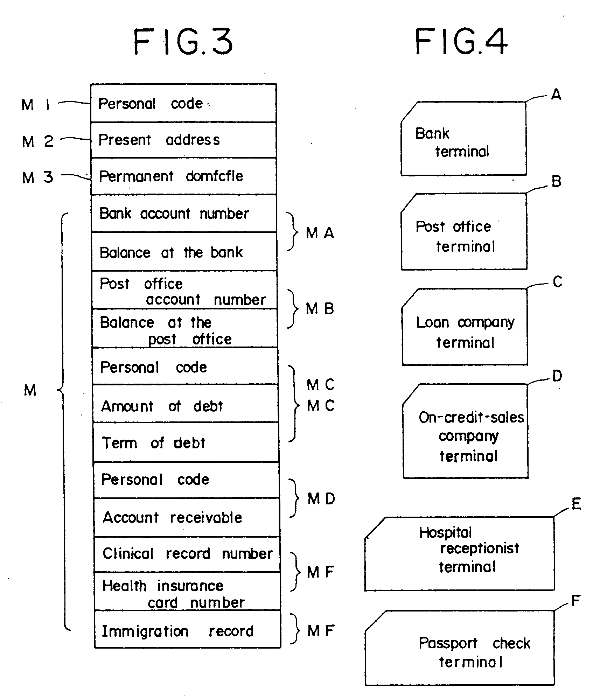

In the Fig. 3, the area M1 stores a personal code of the IC card. The area M2 and the area M3 stores the holder's present address and his/her permanent domicile. The region M constitutes data storage areas. The areas MA store a bank account number and the balance of the account. This area is applicable to a bank terminal. In addition, the areas MB, MC, MD, ME and MF are applicable to a post office terminal, loan company terminal, on-credit-sale company terminal, hospital receptionist terminal, and passport checking terminal respectively. The region M is divided into six data areas, each of them is exclusively accessible to respective terminals.

In Fig. 4, each terminal is provided with an IC card receiving means to receive the IC card to perform data exchange therebetween. It should be noted, however, that the card-receiving means is provided with a contact unit for the contact with the connector 3 in Fig. 1. Then the data exchange is performed under the state where the contact unit is in contact with the connector 3.

The following describes the system operation when the IC card is applied.

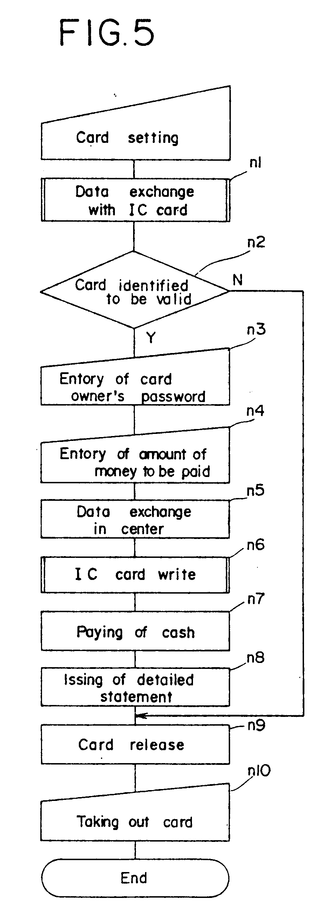

As is shown in Fig. 5, when the IC card is applied, identification of the card is performed at the step n1 (simply n1 hereafter). When the card is acceptable, a data transfer link is established for data exchange. The data stored in the IC card can not be updated at this state. When the card is not acceptable, the card is rejected at the n9 and the operation is terminated upon the rejection of the card.

When the IC card is determined acceptable, a password is requested at the n3. When the transaction mode is a payment mode, the amount of payment is requested to be input at the n4. Then, data transmission is made between the terminal and the terminal center to check the password or to update the date file of the terminal center. The updated data is returned to the IC card where the data is input in the memory (n6). At this time, the area MA responsive to the bank terminal A is available for access. In other words, each storage area within the MB through MF is kept unaccessible thereby assuring the exclusive access to the MA.

Upon completion of the processing at the n1, cash for the requested amount at the n4 is paid out (n7). A statement is issued (n8) and then the IC card is released (n9).

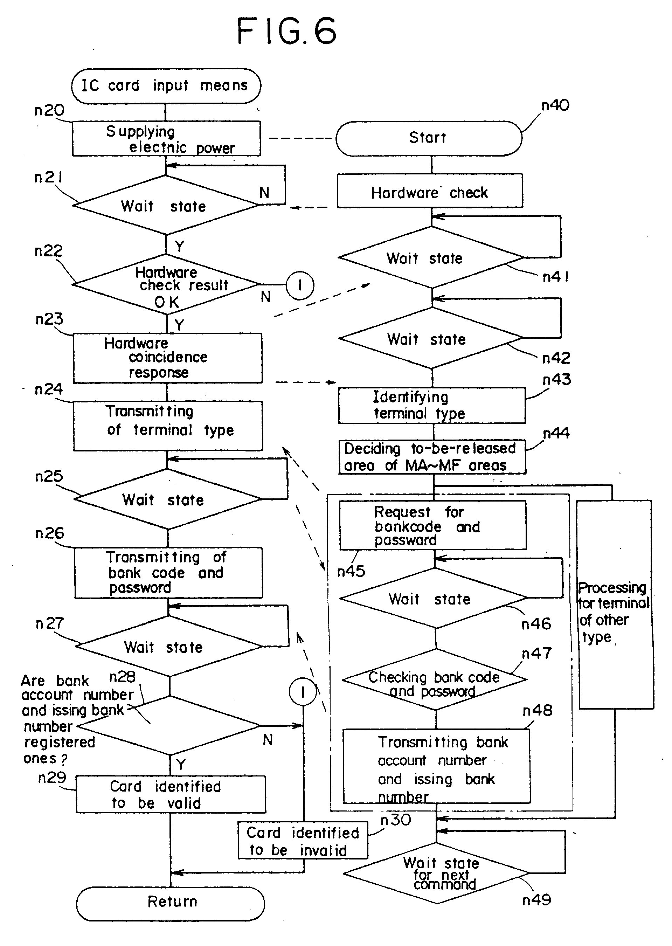

In Fig. 6, the left column flow chart shows the processing for the bank terminal A while the right column chart shows the processing for the IC card. With insertion of the IC card, electric power is supplied from the card receiving means through the connectors C4 and C8 at the n20. In addition, a reset pulse is supplied through the connector C7. The IC card operation program, pre-stored in the ROM 21, starts checking the correct function of hardware involved at the n40. This is a step to check the hardware thereby determining whether or not the IC card is properly applied to the card receiving means. Otherwise, the IC card will be rejected. For example, the rejection happens if the IC card is erroneously inserted into an MS card reader. When the card receiving means receives unacceptable result from the IC card, the n22 determines the card is unacceptable. Then a system link is established and the system elects the n23 if the check result is acceptable. Otherwise, the system elects the n30 to cause the card to be rejected and returns to the initial state. In this case, the system elects the n2 through n9 shown in Fig. 5 to release the card for the termination of the operation.

When the hardware checking shows an acceptable result at the n22, a response signal is sent (n23) and terminal data is sent to the IC card (n24). When the IC card receives the signal for accetable results of the hardware checking and terminal data, then the terminal data received is identified at the n43 and the data storage area applicable thereto is released (n44). As the terminal in use is the bank terminal A, the terminal data to be received by the IC card is the data representing the bank terminal A. The data storage region being accessible is the area MA, to which the access is allowed exclusively.

When the area MA is accessible, request for the bank code and the password are input to the terminal at the n45. After input of these data the terminal transmits the corresponding data to the IC card (n26). The IC card checks the data received from the terminal (n47), then the IC card sends to the terminal a bank account number stored in the are MA and the bank number (not illustrated in Fig. 3) stored in the same area. Naturally this is the procedure where the check result is satisfactory after the identification of these numbers (n28). When they are correct in view of the registered data, card validation is performed at the n29. The IC card is then ready for the next command from the terminal (n49).

Through these operation, the steps n45 through n48 are actuated only when the terminal data sent from the terminal represents a bank terminal. If the data is not in coincidence with the designated terminal, these steps are not actuated while other steps start actuating. The data storage area then ready for access is the area which is exclusively responsive to the given terminal data.

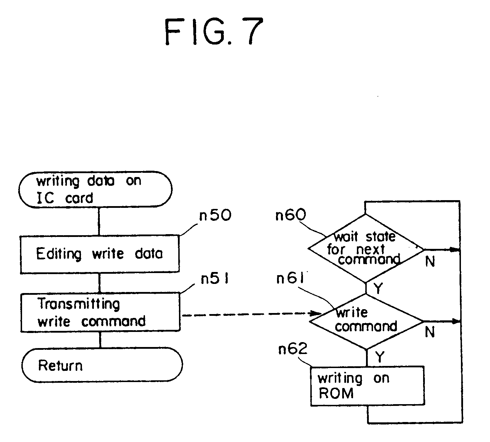

Referring to Fig. 7, the data to be written in the area MA is edited at the n50 when the procedure reaches the n6. The written data is then transmitted together with a "write" command in return. Being ready for the next command, the IC card, when it receives a "write" command from the bank terminal, identifies that the received command is the exact command (n61). Following the "write" command, the transmitted data is written into the region MA. Access to the region MB through MF is of course inhibited at this state.

For the reasons described above, the IC card identifies a terminal data at the n43 and allows the access to the respective data storage area by the identified terminal. Thus, a single card enables a holder to use for multiple terminals while preventing access to wrong data storage areas which are applicable to other terminals.

**Claims**

1. A card system comprising an IC card having a memory region (M) consisting of a number of memory areas (MA,......MF), each of them being accessible only to a compatible transaction service requested at an appropriate terminal, and a terminal having an IC card-receiving means to execute data exchange between said IC card and said IC card-receiving means, the access to a specific transaction service being allowed when the card presented to the terminal contains a respective pass-word for said transaction service, **characterized** by said IC card comprising

    a means for receiving from said IC card-receiving means identification data which identifies the terminal to which said IC card is applied, and

a means for allowing access by said terminal to that memory area (MA .... or MF) of said memory region (M) in which data regarding the identified terminal is stored.

gespeichert sind, aufweist.

## Revendications

1. Un système de carte comprenant une carte à circuit intégré ( ou carte à CI) comprenant une région de mémoire M consistant en un nombre de zones de mémoire (MA,......MF), chacune d'entrez elle n'étant accessible qu'à un service de transaction compatible demandé à un terminal approprié, et un terminal comportant un moyen récepteur de carte à CI pour exécuter un échange de données entre ladite carte à CI et ledit moyen récepteur de carte à CI, l'accès à un service spécifique de transaction étant autorisé lorsque la carte présentée au terminal contient un mot de passe respectif pour ledit service de transaction, **caractérisé** en ce que ladite carte à CI comprend:

un moyen pour recevoir depuis ledit moyen récepteur de carte à CI une donnée d'identification qui identifie le terminal auquel est appliquée ladite carte à CI, et

un moyen pour autoriser l'accès par ledit terminal à la zone de mémoire (MA.... ou MF) de ladite région de mémoire (M) dans laquelle est mémorisée la donnée concernant le terminal identifié.

## Patentansprüche

1. Kartensystem mit einer IC-Karte, welche ein Speichergebiet (M) aufweist, das aus einer Anzahl von Speicherbereichen (MA,...MF) besteht, von denen jeder nur einem an einem geeigneten Terminal angeforderten kompatiblen Transaktionsdienst zugänglich ist, und mit einem Terminal, welches IC-Kartenaufnahmemittel zur Durchführung eines Datenaustauschs zwischen der IC-Karte und den IC-Kartenaufnahmemitteln aufweist, wobei der Zugriff zu einem bestimmten Transaktionsdienst gestattet wird, wenn die dem Terminal dargebotene Karte ein betreffendes Passwort für den Transaktionsdienst enthält, dadurch gekennzeichnet, daß die IC-Karte

Mittel für den Erhalt von Identifikationsdaten, welche das Terminal, auf welche die IC-Karte angewandt wird, identifizieren, von den IC-Kartenaufnahmemitteln, und

Mittel für ein Gestatten eines Zugriffs mit dem Terminal auf den Speicherbereich (MA... oder MF) des Speichergebiets (M), in dem Daten betreffend den identifizierten Terminal

# FIG. 1

# FIG.2

# FIG.3

| | |
|---|---|
| M 1 | Personal code |
| M 2 | Present address |
| M 3 | Permanent domfcfle |
| | Bank account number |
| | Balance at the bank |
| | Post office account number |
| | Balance at the post office |
| | Personal code |
| | Amount of debt |
| | Term of debt |
| | Personal code |
| | Account receivable |
| | Clinical record number |
| | Health insurance card number |
| | Immigration record |

} M A
} M B
} M C  M C
} M D
} M F
} M F

M

# FIG.4

Bank terminal — A

Post office terminal — B

Loan company terminal — C

On-credit-sales company terminal — D

Hospital receptionist terminal — E

Passport check terminal — F

6

# FIG.5

```
        ┌──────────────────────┐
        │    Card   setting    │
        └──────────┬───────────┘
                   │              ╮ n1
        ┌──────────┴───────────┐
        │   Data   exchange    │
        │     with IC card     │
        └──────────┬───────────┘
                   │              ╮ n2
              ╱────┴────╲               N
             ╱  Card identified ╲────────────┐
             ╲   to be valid    ╱            │
              ╲────┬────╱                    │
                   │ Y            ╮ n3       │
        ┌──────────┴───────────┐            │
        │   Entory  of  card   │            │
        │  owner's   password  │            │
        └──────────┬───────────┘            │
                   │              ╮ n4       │
        ┌──────────┴───────────┐            │
        │   Entory of amount of│            │
        │    money to be paid  │            │
        └──────────┬───────────┘            │
                   │              ╮ n5       │
        ┌──────────┴───────────┐            │
        │   Data   exchange    │            │
        │     in   center      │            │
        └──────────┬───────────┘            │
                   │              ╮ n6       │
        ┌──────────┴───────────┐            │
        │   I C  card  write   │            │
        └──────────┬───────────┘            │
                   │              ╮ n7       │
        ┌──────────┴───────────┐            │
        │   Paying  of  cash   │            │
        └──────────┬───────────┘            │
                   │              ╮ n8       │
        ┌──────────┴───────────┐            │
        │  Issing of detailed  │            │
        │      statement       │            │
        └──────────┬───────────┘            │
                   │◄───────────────────────┘
                   │              ╮ n9
        ┌──────────┴───────────┐
        │    Card   release    │
        └──────────┬───────────┘
                   │              ╮ n10
        ┌──────────┴───────────┐
        │   Taking  out  card  │
        └──────────┬───────────┘
             ╭─────┴─────╮
             │    End    │
             ╰───────────╯
```

7

EP 0 193 635 B1

# FIG.6

IC card input means

n20 Supplying electric power

n21 Wait state — N

n22 Hardware check result OK — N — (1)

n23 Hardware coincidence response

n24 Transmitting of terminal type

n25 Wait state

n26 Transmitting of bank code and password

n27 Wait state

n28 Are bank account number and issing bank number registered ones ? — N

n29 Card identified to be valid

Card identified to be invalid — n30

Return

n40 Start

Hardware check

Wait state — n41

Wait state — n42

n43 Identifying terminal type

n44 Deciding to-be-released area of MA~MF areas

Request for bankcode and password — n45

Wait state — n46

n47 Checking bank code and password

n48 Transmitting bank account number and issing bank number

Processing for terminal of other type

Wait state for next command — n49

8

# FIG. 7

```
  ┌─────────────────────┐
  │ writing data on     │
  │ IC card             │
  └──────────┬──────────┘
             │                              n50
  ┌──────────┴──────────┐
  │ Editing write data  │
  └──────────┬──────────┘
             │                              n51
  ┌──────────┴──────────┐
  │ Transmitting        │
  │ write command       │
  └──────────┬──────────┘
             │
  ┌──────────┴──────────┐
  │ Return              │
  └─────────────────────┘
```

n50 — Editing write data

n51 — Transmitting write command

n60 — wait state for next command — N

n61 — write command — N

n62 — writing on ROM